# FASCICULE DE BREVET EUROPEEN

(11) **EP 3 613 121 B1**
(45) Date de publication et mention de la délivrance du brevet: **04.08.2021**
(21) Numéro de dépôt: 18713335.0
(22) Date de dépôt: 12.03.2018
(51) Int. Cl.: H01M 10/04, H02J 7/34, H02J 7/00

(54) **BATTERIE À ENSEMBLES DE GROUPE DE CELLULE(S) ET MODULE DE CONVERSION, POUR FOURNIR DIFFÉRENTES TENSIONS ET FAIRE DIFFÉRENTES RECHARGES**
BATTERIE MIT ZELLENGRUPPE UND UMWANDLUNGSMODULANORDNUNGEN ZUR SPEISUNG VERSCHIEDENER SPANNUNGEN UND ZUR DURCHFÜHRUNG VERSCHIEDENER LADEOPERATIONEN
BATTERY WITH CELL GROUP AND CONVERSION MODULE ASSEMBLIES, FOR SUPPLYING VARIOUS VOLTAGES AND CARRYING OUT VARIOUS CHARGING OPERATIONS

(30) Priorité: 21.04.2017 FR 1753481
(43) Date de publication de la demande: 26.02.2020
(73) Titulaire: PSA Automobiles SA, 78300 Poissy (FR); Centre National de la Recherche Scientifique, 75794 Paris Cedex 16 (FR); Ecole Normale Supérieure de Cachan, 94235 Cachan Cedex (FR)
(72) Inventeur: ROY, Francis, 91940 Les Ulis (FR); REVOL, Bertrand, 94260 Fresnes (FR)
(86) Numéro de dépôt international: PCT/FR2018/050581
(87) Numéro de publication internationale: WO 2018/193173

(56) Documents cités:
- WO-A2-2014/013058
- FR-A1- 2 977 986

## Description

L'invention concerne les batteries rechargeables qui comprennent plusieurs groupes de cellule(s) de stockage d'énergie électrique et qui sont destinées à équiper certains systèmes.

Certains systèmes comprennent au moins une batterie rechargeable comportant un boîtier logeant des groupes de cellule(s) chargée(s) de stocker de l'énergie électrique. C'est par exemple le cas de certains véhicules, de type tout électrique ou hybride et éventuellement de type automobile, et dans lesquels la/les batterie(s) rechargeable(s) est/sont généralement installée(s) dans le soubassement.

Les cellules précitées peuvent, par exemple, être de type Li-ion ou Ni-MH ou plomb ou Lithium-Métal-Polymère (ou LMP) ou encore Sodium-ion.

A titre d'exemple, dans un véhicule tout électrique ou hybride, la batterie rechargeable peut être chargée d'alimenter en tensions de types différents, sur des sorties différentes, des équipements (ou organes) électriques de types différents, et peut être rechargée par couplage temporaire d'au moins une entrée de recharge à une borne de recharge publique ou privée.

Ainsi, une première sortie peut être dédiée à l'alimentation d'équipement(s) électrique(s) de puissance en basse tension continue (typiquement sous 400 V à 600 V), une deuxième sortie peut être dédiée à l'alimentation d'équipement(s) électrique(s) en alternatif triphasé, et une troisième sortie peut être dédiée à l'alimentation d'équipements électriques d'un réseau de bord en très basse tension continue (typiquement sous 12 V). Une première entrée de recharge peut être dédiée à la recharge rapide en courant continu et/ou une seconde entrée de recharge peut être dédiée à la recharge lente en courant alternatif monophasé ou à la recharge rapide en courant alternatif triphasé. On notera que lorsque les cellules fonctionnent en courant ou tension continu(e) et que la borne de recharge fournie un courant alternatif, le véhicule doit être équipé d'un chargeur couplé à la seconde entrée de recharge de sa batterie et chargé de convertir le courant alternatif entrant en courant continu.

Ce type de batterie rechargeable comprend généralement des moyens de gestion qui sont chargés d'assurer, via des cartes électroniques appropriées, une mesure de la tension sur les bornes de sortie, une mesure de la température de chaque groupe de cellule(s) et une mesure du courant interne. Ces moyens de gestion sont également chargés de contrôler les conditions et l'état de charge de chaque groupe de cellule(s) pour protéger la batterie en l'empêchant de fonctionner en dehors d'une plage de fonctionnement normal prédéfinie par des courants de charge et de décharge limites, des plages de températures limites et des niveaux de tension limites de fonctionnement des groupes de cellule(s).

On notera que ce type de batterie comprend généralement, également, des moyens permettant de la mettre hors circuit lors d'un accident ou d'une intervention de maintenance, une sortie pourvue d'un interrupteur avec un circuit de précharge, un interrupteur pour activer la recharge rapide, et des fusibles sur chaque entrée/sortie.

Par ailleurs, le fonctionnement de ce type de batterie est supervisé par des moyens de supervision internes, grâce à des algorithmes permettant notamment de calculer son état de charge (ou SOC (« State Of Charge »)), de déterminer son état de santé (ou SOH (« State Of Health »)), de gérer l'équilibrage des groupes de cellule(s), de communiquer avec un calculateur du véhicule, de limiter les appels de courant (courant de décharge ou de recharge), et d'assurer sa gestion thermique en régulant le débit d'un liquide caloporteur la traversant et/ou l'entourant partiellement.

Pour que les équipements électriques des différents types puissent être alimentés de façons appropriées, on doit installer en aval de la sortie de la batterie, différents organes de conversion d'énergie, comme par exemple un convertisseur de type DC-DC (continu/continu) et un onduleur. Ces organes de conversion d'énergie, externes à la batterie, sont assez volumineux et assez onéreux, et ne peuvent pas sécuriser la batterie lorsqu'elle fait l'objet d'un court-circuit interne qui se traduit instantanément par une libération d'énergie électrique très importante liée à la décharge de l'ensemble des cellules. De plus, le convertisseur de type DC-DC induit des pertes d'énergie et les tensions triphasées produites par l'onduleur sont chargées d'harmoniques qui induisent des pertes fer supplémentaires dans une machine électrique (par exemple motrice). De son côté, l'onduleur est également une source de pollution électromagnétique pouvant dégrader le fonctionnement de la machine électrique.

On doit également installer dans l'architecture électrique du système, en aval de la batterie, de nombreux filtres externes réalisés par des éléments inductifs et capacitifs afin d'obtenir un niveau de compatibilité électromagnétique acceptable pour tous les équipements électriques. Or, ces filtres externes s'avèrent particulièrement volumineux.

Il a certes été proposé dans le document brevet FR 2977986 d'équiper la batterie de moyens de commutation destinés à mettre en série et/ou en parallèle les cellules, afin de contrôler la tension délivrée aux bornes. Mais cela ne permet pas de générer en sortie de la batterie plusieurs (au moins deux) types de tension différents choisis parmi l'alternatif monophasé, l'alternatif triphasé et le continu. Par conséquent, on est toujours contraint d'utiliser certains organes de conversion d'énergie en aval de la batterie pour définir les différents types de tension nécessaires aux équipements électriques du système considéré.

Enfin, le chargeur, externe à la batterie et permettant lors d'une recharge en courant alternatif de convertir ce dernier en courant continu, s'avère assez volumineux et assez onéreux.

On connait encore du document WO2014013058 un dispositif de charge comprenant un convetisseur réversible.

L'invention a notamment pour but d'améliorer la situation en proposant une nouvelle architecture de batterie.

Elle propose notamment à cet effet une batterie rechargeable comprenant des cellules de stockage d'énergie électrique, au moins deux sorties principales propres à délivrer des tensions de types différents et destinées à alimenter différents équipements électriques d'un système, et une première entrée pour une recharge en courant continu.

Cette batterie rechargeable se caractérise par le fait que sa première entrée est également adaptée à une recharge en courant alternatif monophasé, et qu'elle comprend également :
- une seconde entrée pour la recharge en courant alternatif triphasé,
- des moyens d'interruption propres à être placés chacun dans un état fermé ou un état ouvert en fonction d'instructions reçues et installés sur les première et seconde entrées et l'une au moins des sorties principales,
- des modules de conversion et des groupes d'au moins une cellule, un module de conversion étant installé à chaque sortie d'un groupe, chaque module de conversion comprenant : un premier convertisseur de type DC-DC et propre à convertir une première tension continue fournie par la sortie du groupe associé en une deuxième tension continue prédéfinie, un onduleur propre à convertir cette première tension continue en une troisième tension, et des moyens d'interconnexion propres à connecter une sortie du premier convertisseur ou une sortie de l'onduleur à une sortie d'un autre groupe ou à l'une des sorties principales ou à l'une des première et seconde entrées en fonction d'une instruction reçue, et
- des moyens de contrôle principaux propres à générer chaque instruction dédiée à chaque module de conversion et à chacun des moyens d'interruption en fonction d'une définition reçue du type de tension qui est requis pour alimenter au moins l'un des équipements électriques ou pour recharger au moins un groupe de cellule(s).

Grâce à l'invention, la nouvelle architecture permet désormais non seulement de produire en interne dans la batterie rechargeable n'importe quel(s) type(s) de tension (ou courant) en fonction des besoins, sans qu'il faille prévoir en aval des sorties principales de cette batterie des organes de conversion d'énergie, mais également de réaliser n'importe quel type de recharge, sans qu'il faille prévoir un chargeur externe sur l'une des entrées de recharge de la batterie rechargeable.

La batterie rechargeable selon l'invention peut comporter d'autres caractéristiques qui peuvent être prises séparément ou en combinaison, et notamment :
- ses moyens d'interruption peuvent comprendre, d'une première part, des premiers moyens d'interruption installés sur la première entrée afin d'interdire ou d'autoriser la recharge rapide en courant continu ou la recharge lente en courant alternatif monophasé en fonction d'une instruction reçue, d'une deuxième part, des deuxièmes moyens d'interruption installés sur la seconde entrée afin d'interdire ou d'autoriser la recharge rapide en courant alternatif triphasé en fonction d'une instruction reçue, et, d'une troisième part, des troisièmes moyens d'interruption installés sur l'une des sorties principales afin d'interdire ou d'autoriser l'alimentation en tension de chaque équipement électrique associé ;
   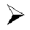 elle peut également comprendre des moyens d'interruption complémentaires connectés à des bornes de mise en série de groupes de cellule(s) et propres à être placés chacun dans un premier état fermé assurant une interconnexion de bornes de neutre de groupes de cellule(s) ou un second état fermé assurant une interconnexion de bornes de mise en série de groupes de cellule(s) en fonction d'instructions reçues des moyens de contrôle principaux ;
      - ses moyens de contrôle principaux peuvent être propres à générer une première instruction destinée à placer les premiers moyens d'interruption dans l'état fermé, les deuxièmes et troisièmes moyens d'interruption dans l'état ouvert, et les moyens d'interruption complémentaires dans le premier état pour induire une recharge rapide en courant continu ou une recharge lente en courant alternatif monophasé, ou une deuxième instruction destinée à placer les deuxièmes moyens d'interruption dans l'état fermé, les premiers et troisièmes moyens d'interruption dans l'état ouvert, et les moyens d'interruption complémentaires dans le second état pour induire une recharge rapide en courant alternatif triphasé, ou encore une troisième instruction destinée à placer les troisièmes moyens d'interruption dans l'état fermé, les premiers et deuxièmes moyens d'interruption dans l'état ouvert, et les moyens d'interruption complémentaires dans le premier état pour induire une alimentation en tension de chaque équipement électrique associé à la sortie principale sur laquelle sont installés les troisièmes moyens d'interruption ;
- la première entrée peut être connectée à une partie de la sortie principale sur laquelle sont installés les troisièmes moyens d'interruption ;
- la seconde entrée peut être connectée à la sortie principale sur laquelle sont installés les troisièmes moyens d'interruption ;
- elle peut comprendre des première, deuxième et troisième sorties principales propres à délivrer respectivement des tensions de trois types différents ;
   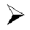 ses moyens de contrôle principaux peuvent être propres à générer des instructions destinées à induire une recharge de la batterie par la première ou deuxième entrée de recharge et en même temps la délivrance d'un courant sur les première et troisième sorties principales ;
- les types de tension peuvent être choisis parmi une très basse tension continue, une basse tension continue, et une tension alternative monophasée ou triphasée ;
- chaque module de conversion peut comprendre des moyens de contrôle auxiliaires propres à générer des signaux de commande propres à placer l'onduleur associé dans un état qui est fonction d'une instruction reçue ;
   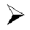 chaque onduleur peut être agencé sous la forme d'un pont en H, et chaque module de conversion peut comprendre des moyens de pilotage propres à placer son pont en H dans un état qui est fonction d'un signal de commande généré par les moyens de contrôle auxiliaires ;
      - chaque module de conversion peut comprendre un second convertisseur de type DC-DC et propre à convertir la première tension continue en une quatrième tension continue prédéfinie destinée à alimenter les moyens de pilotage associés ;
   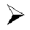 les moyens de contrôle auxiliaires associés à chaque groupe peuvent être propres à déterminer une tension aux bornes du groupe associé et une température au sein du groupe associé, et à estimer un état de charge en cours du groupe associé ;
- elle peut comprendre un bus multiplexé couplé aux moyens de contrôle principaux, à chacun des modules de conversion, à chacun des premiers, deuxièmes et troisièmes moyens d'interruption, et aux éventuels moyens d'interruption complémentaires. Dans ce cas, chaque module de conversion peut comprendre un contrôleur couplé au bus multiplexé.

L'invention propose également un système comprenant des équipements électriques et au moins une batterie rechargeable du type de celle présentée ci-avant et propre à alimenter ces équipements électriques. Un tel système peut, par exemple, constituer un véhicule de type tout électrique ou hybride, et éventuellement de type automobile.

D'autres caractéristiques et avantages de l'invention apparaîtront à l'examen de la description détaillée ci-après, et des dessins annexés, sur lesquels :
- la figure 1 illustre schématiquement et fonctionnellement un exemple de véhicule de type tout électrique et comprenant une batterie rechargeable selon l'invention,
- la figure 2 illustre schématiquement et fonctionnellement un exemple de réalisation d'une batterie rechargeable selon l'invention, et
- la figure 3 illustre schématiquement et fonctionnellement un exemple de réalisation d'un module de conversion associé à un groupe de cellule(s) et pouvant faire partie d'une batterie rechargeable selon l'invention.

L'invention a notamment pour but de proposer une batterie rechargeable B1 comprenant des cellules de stockage propres à stocker de l'énergie électrique, au moins deux sorties principales SPk propres à délivrer des tensions de types différents afin d'alimenter différents équipements électriques d'un système V, et deux entrées de recharge ER1 et ER2 pour le courant continu et le courant alternatif.

Dans ce qui suit, on considère à titre d'exemple non limitatif que la batterie rechargeable B1 fait partie d'un véhicule automobile de type tout électrique, comme par exemple une voiture. Mais l'invention n'est pas limitée à ce type de système. Elle concerne en effet tout type de système comportant au moins une batterie rechargeable (comportant des groupes de cellule(s)), et notamment les véhicules, qu'ils soient terrestres, maritimes (ou fluviaux) ou aériens, les installations, éventuellement de type industriel, et les bâtiments. On notera d'ailleurs, que lorsque le système est un véhicule, son groupe motopropulseur (ou GMP) peut être de type tout électrique ou de type hybride (thermique/électrique).

Par ailleurs, on considère dans ce qui suit, à titre d'exemple non limitatif, que les cellules (de stockage) de la batterie (rechargeable) B1 sont de type Li-ion. Mais l'invention n'est pas limitée à ce type de cellule. Elle concerne en effet tout type de cellule capable de stocker de l'énergie électrique en vue de la restituer. Ainsi, les cellules pourront être également de type Ni-MH, ou plomb, ou Sodium-ion, ou encore Lithium-Métal-Polymère (ou LMP), par exemple.

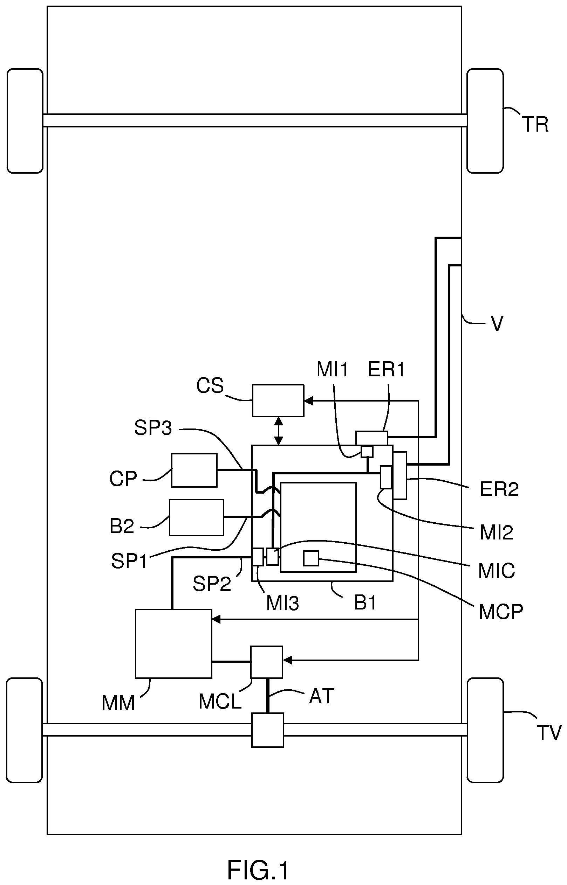

On a schématiquement représenté sur la figure 1 un système V, ici un véhicule automobile, comprenant une chaîne de transmission comportant un groupe motopropulseur (ou GMP) de type tout électrique, un calculateur de supervision CS propre à superviser (ou gérer) le fonctionnement du GMP, et un équipement électrique de puissance CP. On notera que le GMP pourrait également être de type hybride (thermique/électrique).

Le GMP comprend notamment un équipement électrique MM définissant une machine motrice, un moyen de couplage MCP, et au moins une batterie (rechargeable) B1 selon l'invention.

La machine motrice MM est une machine ou un moteur électrique (et donc non thermique) destiné(e) à fournir du couple pour au moins un train TV du véhicule V via le moyen de couplage MCL. On notera que dans l'exemple de réalisation illustré non limitativement, la machine motrice MM fournit du couple pour le train avant TV via le moyen de couplage MCL. Mais dans une variante de réalisation elle pourrait fournir du couple au seul train arrière TR ou bien aux trains avant TV et arrière TR, via le second moyen de couplage MC2.

Cette machine motrice MM fournit, ici, son couple à un arbre de transmission AT qui est couplé au train avant TV, via le moyen de couplage MCL. Ici, compte tenu du type de véhicule décrit, les trains avant TV et arrière TR comprennent des roues.

Le fonctionnement de la machine motrice MM est piloté par le calculateur de supervision CS.

La batterie B1 est par exemple, ici, installée dans le soubassement du véhicule V.

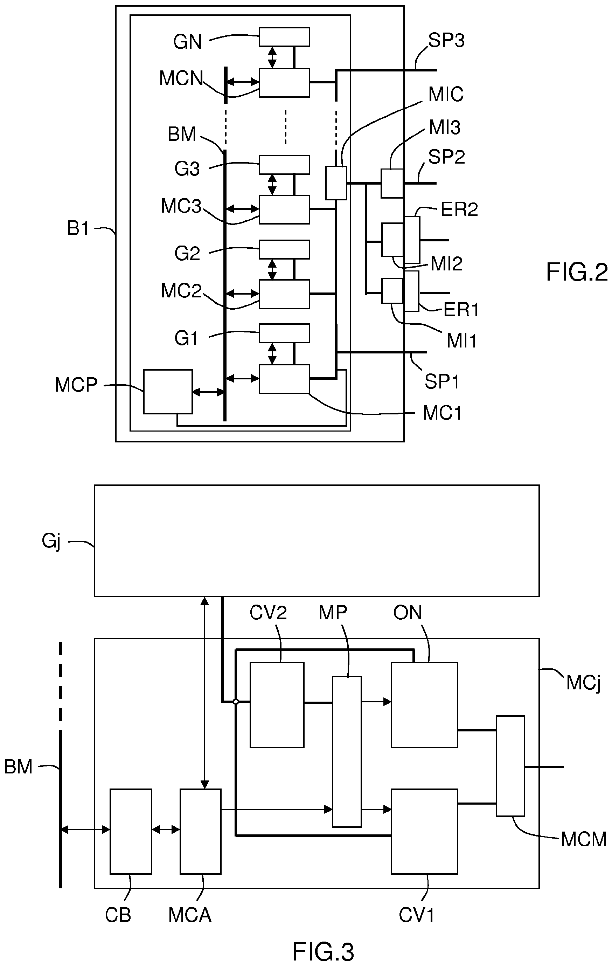

Comme cela apparaît mieux sur la figure 2, cette batterie B1 comprend un boîtier logeant, notamment, des groupes Gj (j = 1 à N) d'au moins une cellule de stockage d'énergie électrique, des première ER1 et seconde ER2 entrées de recharge, des moyens d'interruption MIp, et au moins deux sorties principales SPk propres à délivrer des tensions de types différents et destinées à alimenter différents équipements électriques MM, CP, B2 du système V (ici un véhicule automobile). La valeur de N, qui fixe le nombre de groupes Gj dépend des besoins du système V. Elle peut donc prendre n'importe quelle valeur supérieure ou égale à deux.

On notera que lorsqu'un groupe Gj comprend plusieurs cellules (de stockage d'énergie électrique), ces dernières peuvent être montées en série ou bien en parallèle au sein de leur groupe Gj.

Comme illustré non limitativement sur les figures 1 et 2, dans un véhicule tout électrique la batterie B1 peut, par exemple, comprendre trois sorties principales SP1 à SP3 (k = 1 à 3) propres à délivrer respectivement des tensions de trois types différents. Ces types de tension peuvent être choisis parmi une très basse tension continue, une basse tension continue, et une tension alternative triphasée. Ainsi :
- une première sortie principale SP1 (k = 1) peut être dédiée à l'alimentation d'une batterie de servitude B2 et/ou peut alimenter en très basse tension continue (typiquement sous 12 V) des équipements électriques d'un réseau de bord (non illustré),
- une deuxième sortie principale SP2 (k = 2) peut être dédiée à l'alimentation en alternatif monophasé ou triphasé d'équipement(s) électrique(s), comme par exemple la machine motrice MM, et
- une troisième sortie principale SP3 (k = 3) peut être dédiée à l'alimentation en basse tension continue (typiquement sous 450 V ou 600 V) d'équipement(s) électrique(s) de puissance, comme par exemple un compresseur CP d'un circuit de chauffage/climatisation ou des résistances de chauffage (éventuellement de type CTP) d'un circuit de chauffage.

On notera que la batterie B1, selon l'invention, peut comporter n'importe quel nombre de sorties principales SPk, dès lors que ce nombre est supérieur ou égal à deux.

La première entrée de recharge ER1 est dédiée à la recharge rapide en courant continu et à la recharge lente en courant alternatif monophasé. Elle comprend dans la réalité deux bornes.

La seconde entrée de recharge ER2 est dédiée à la recharge rapide en courant alternatif triphasé. Elle comprend dans la réalité quatre bornes, dont une pour le neutre.

Comme cela apparait sur la figure 2, la batterie B1, selon l'invention, comprend également, à l'intérieur de son boîtier, des modules de conversion MCj et des moyens de contrôle principaux MCP.

Chaque module de conversion MCj est installé en sortie d'un groupe Gj de cellule(s) avec lequel il constitue un ensemble (référencé j) parmi N ensembles. Par ailleurs, chaque module de conversion MCj comprend, comme illustré sur la figure 3, au moins un premier convertisseur CV1, un onduleur ON et des moyens d'interconnexion MCM.

Il est important de noter que, dans une variante de réalisation, chaque groupe Gj de cellule(s) pourrait faire partie d'un module de conversion MCj.

Le premier convertisseur CV1 de chaque module de conversion MCj est de type DC-DC (continu/continu) et propre à convertir une première tension continue vc1 en une deuxième tension continue vc2 prédéfinie et préférentiellement ajustable. Cette première tension continue vc1 peut être fournie par la sortie du groupe Gj (associé au premier convertisseur CV1 du module de conversion MCj) lors d'une phase de décharge de la batterie B1 ou lors d'une phase de recharge de la batterie B1 par la première entrée de recharge ER1 ou la deuxième entrée de recharge ER2.

Par exemple, lorsque chaque cellule est de type Li-ion, elle peut délivrer à ses bornes, en fonctionnement normal, une première tension continue vc1 d'environ 3,7 V nominale. Dans ce cas, un groupe Gj de quatre cellules peut délivrer à ses bornes, en fonctionnement normal, une première tension continue vc1 d'environ 14,8 V nominale.

La deuxième tension continue vc2 peut, par exemple, être comprise entre 8 V et 16 V selon la valeur de la première tension continue vc1, et être délivrée sous une puissance de 75 W.

L'onduleur ON de chaque module de conversion MCj est propre à convertir la première tension continue vc1 en une troisième tension vc3 prédéfinie, et réciproquement, selon que l'on est dans une phase de décharge ou de recharge de la batterie B1.

La troisième tension vc3 peut, par exemple, être égale à +vc1, -vc1 ou 0 (nulle), et peut, par exemple, permettre de générer sur la sortie principale SP2 de la batterie B1 un système de tensions alternatives nécessaires, par exemple, au fonctionnement de la machine motrice MM, ou par exemple asservir le courant durant les phases de recharge de la batterie B1 via les première ER1 et deuxième ER2 entrées de recharge.

Les moyens d'interconnexion MCM de chaque module de conversion MCj sont propres à connecter une sortie du premier convertisseur CV1 associé ou une sortie de l'onduleur ON associé à une sortie d'un autre module de conversion MCj' (j' ≠ j) alimenté par le groupe Gj' ou à l'une des sorties principales SPk en fonction d'une instruction reçue ou encore à l'une des première ER1 et seconde ER2 entrées de recharge. Les modules de conversion MCj peuvent ainsi être associés en série ou en parallèle afin de délivrer les tensions et les puissances selon les sorties principales SPk ou de recharger les cellules de certains au moins des groupes Gj.

Les moyens d'interruption MIp (ici p = 1 à 3) sont propres à être placés chacun dans un état fermé ou un état ouvert en fonction d'instructions reçues et sont installés sur les première ER1 et seconde ER2 entrées et l'une au moins des sorties principales SPk.

Les moyens de contrôle principaux MCP sont propres à générer chaque instruction dédiée à chaque module de conversion MCj et à chacun des moyens d'interruption MIp en fonction d'une définition reçue du type de tension qui est requis pour alimenter au moins l'un des équipements électriques MM, CP, B2 du système V ou pour recharger au moins un groupe Gj de cellule(s).

Ces moyens de contrôle principaux MCP peuvent, par exemple, être réalisés au moyen d'un processeur de signal numérique (ou DSP (« Digital Signal Processor »)), ou de façon plus générale à l'aide d'un composant programmable (par exemple de type FPGA (« Field Programmable Gate Array » - « réseau logique programmable ») ou microcontrôleur).

Grâce à l'association à chaque groupe Gj de cellule(s) d'un module de conversion MCj assurant en interne les fonctions de conversion, et au contrôle de chacun de ces modules de conversion MCj par des moyens de contrôle principaux MCP, il est désormais possible de produire en interne dans la batterie B1 n'importe quel(s) type(s) de tension (ou courant) en fonction des besoins, sans qu'il faille prévoir en aval des sorties principales SPk de cette batterie B1 des organes de conversion d'énergie. On comprendra en effet, que cette batterie B1 peut désormais délivrer sur une sortie principale SPk une tension d'un premier type pour au moins un équipement électrique, ou bien sur au moins deux sorties principales SPk et SPk' respectivement des tensions de types différents pour des équipements électriques de types différents. On notera qu'il peut même être éventuellement possible de choisir la valeur de la tension que la batterie B1 délivre sur une sortie principale SPk donnée, grâce à une sélection appropriée du nombre de groupes Gj utilisés pour produire cette tension. On notera également que la batterie B1 pouvant éventuellement délivrer une très basse tension de façon permanente, elle pourrait directement alimenter le réseau de bord du véhicule V, permettant ainsi de s'affranchir de la batterie de servitude B2.

De plus, grâce aux moyens d'interruption MIp on peut réaliser n'importe quel type de recharge (en courant continu, courant alternatif monophasé ou courant alternatif triphasé), sans qu'il faille prévoir un chargeur externe sur l'une des entrées de recharge de la batterie B1. En d'autres termes, le véhicule V peut être couplé à n'importe quel type de borne de recharge d'une source d'alimentation en courant continu ou d'un réseau alternatif monophasé (par exemple 230 V - 50Hz) ou triphasé (par exemple 230V/400V - 50hz).

Dans l'exemple illustré non limitativement sur les figures 1 et 2, les moyens d'interruption MIp comprennent des premiers MI1 (p = 1), deuxièmes MI2 (p = 2) et troisièmes MI3 (p = 3) moyens d'interruption.

Les premiers moyens d'interruption MI1 sont installés sur la première entrée de recharge ER1 afin d'interdire ou d'autoriser la recharge rapide en courant continu ou la recharge lente en courant alternatif monophasé en fonction d'une instruction reçue. Ils comprennent donc ici deux interrupteurs connectés respectivement aux deux bornes de la première entrée de recharge ER1.

Les deuxièmes moyens d'interruption MI2 sont installés sur la seconde entrée de recharge ER2 afin d'interdire ou d'autoriser la recharge rapide en courant alternatif triphasé en fonction d'une instruction reçue. Ils comprennent donc ici quatre interrupteurs connectés respectivement aux quatre bornes de la seconde entrée de recharge ER2.

Les troisièmes moyens d'interruption MI3 sont installés sur l'une des sorties principales SPk (ici sur la deuxième SP2) afin d'interdire ou d'autoriser l'alimentation en tension de chaque équipement électrique associé (ici la machine motrice MM). Ils comprennent donc ici trois interrupteurs connectés respectivement aux trois bornes de la deuxième sortie principale SP2 qui alimente la machine motrice MM.

On notera, comme illustré sur les figures 1 et 2, qu'il est avantageux que la batterie B1 comprenne également des moyens d'interruption complémentaires MIC connectés à des bornes de mise en série de groupes Gj de cellule(s). Ces moyens d'interruption complémentaires MIC sont propres à être placés chacun dans un premier état fermé assurant une interconnexion de bornes de neutre de groupes Gj de cellule(s) ou un second état fermé assurant une interconnexion de bornes de mise en série de groupes Gj de cellule(s) en fonction d'instructions reçues des moyens de contrôle principaux MCP. Ces moyens d'interruption complémentaires MIC comprennent autant d'interrupteurs qu'il y a de groupements de modules de conversion MCj montés en série, chacun de ces groupements pouvant être monté en série avec un autre groupement via une ligne de mise en série.

En présence de ces premiers MI1, deuxièmes MI2 et troisièmes MI3 moyens d'interruption et de ces moyens d'interruption complémentaires MIC, les moyens de contrôle principaux MCP peuvent être propres à générer aux moins des première, deuxième et troisième instructions.

La première instruction est destinée à placer les premiers moyens d'interruption MI1 dans l'état fermé, les deuxièmes MI2 et troisièmes MI3 moyens d'interruption dans l'état ouvert, et les moyens d'interruption complémentaires MIC dans le premier état pour induire une recharge rapide en courant continu ou une recharge lente en courant alternatif monophasé.

La deuxième instruction est destinée à placer les deuxièmes moyens d'interruption MI2 dans l'état fermé, les premiers MI1 et troisièmes MI3 moyens d'interruption dans l'état ouvert, et les moyens d'interruption complémentaires MIC dans le second état pour induire une recharge rapide en courant alternatif triphasé.

La troisième instruction est destinée à placer les troisièmes moyens d'interruption MI3 dans l'état fermé, les premiers MI1 et deuxièmes MI2 moyens d'interruption dans l'état ouvert, et les moyens d'interruption complémentaires MIC dans le premier état pour induire une alimentation en tension de chaque équipement électrique MM associé à la sortie principale SPk (ici la deuxième SP2) sur laquelle sont installés les troisièmes moyens d'interruption MI3.

On notera, comme illustré non limitativement sur les figures 1 et 2, que la première entrée de recharge ER1 peut être connectée à une partie de la sortie principale SPk (ici la deuxième SP2) sur laquelle sont installés les troisièmes moyens d'interruption MI3 selon la configuration définie par les moyens d'interrution complémentaires MIC.

On notera également, comme illustré non limitativement sur les figures 1 et 2, que la seconde entrée de recharge ER2 peut être connectée à la sortie principale SPk (ici la deuxième SP2) sur laquelle sont installés les troisièmes moyens d'interruption MI3 selon la configuration définie par les moyens d'interrution complémentaires MIC.

On notera également que les moyens de contrôle principaux MCP peuvent générer des instructions qui sont destinées à induire une recharge de la batterie B1 par la première ER1 ou deuxième ER2 entrée de recharge et en même temps la délivrance d'un courant sur les première SP1 et troisième SP3 sorties principales.

On notera également, bien que cela n'apparaisse pas sur les figures 1 à 3, que la batterie B1 peut éventuellement comprendre en complément des moyens permettant de la mettre hors circuit lors d'un accident ou d'une intervention de maintenance, et un interrupteur sur sa deuxième sortie principale SP2 pour isoler sa recharge de la machine motrice MM, et des fusibles sur chaque entrée/sortie principale SPk.

Afin de permettre la mise en série et/ou en parallèle des deuxièmes tensions continues vc2, les architectures des premiers convertisseurs CV1 (de type DC-DC et isolés) peuvent, par exemple, être de type Push-Pull, ou Forward à redressement synchrone, ou à hacheurs entrelacés isolés, ou encore à convertisseur à résonance. La topologie de ces premiers convertisseurs CV1 doit permettre la réversibilité en puissance.

De préférence, chaque premier convertisseur CV1 est une structure isolée et réversible en puissance. Le rapport cyclique noté D et le rapport de transformation (noté m) de chaque premier convertisseur CV1 permet de définir la deuxième tension continue vc2 isolée galvaniquement en sortie de ce dernier (CV1) selon une loi fonction de D, m et vc1, pour le groupe Gj considéré.

A titre d'exemple, si 15 kW sont au total nécessaires pour alimenter des équipements électriques reliés aux sorties principales SPk relatives à la basse tension continue (par exemple 450 V) consommant 12 kW et à la très basse tension continue (par exemple 12V) consommant 3kW, alors chaque premier convertisseur CV1 est dimensionné pour délivrer une puissance de 75 W, si 201 cellules sont présentes dans la batterie B1 (soit 201 MCj associés à 201 Gj).

Ainsi pour reprendre l'exemple précédent, la production d'une tension continue de 450 V pour une puissance de 12 kW peut être obtenue par l'association de 162 cellules dans la batterie B1. L'agencement de ces 162 cellules peut être réalisé par la mise en parallèle de trois fois 54 modules de conversion MCj dont chaque premier convertisseur CV1 associé délivrerait une tension continue comprise entre 8 V et 9 V.

Toujours en suivant cet exemple, la production d'une tension continue de 12 V pour une puissance de 3 kW, utilisable ici par le réseau de bord, peut être obtenue par la mise en parallèle de 39 cellules dans la batterie B1. On notera que ces 39 cellules peuvent être éventuellement dédiées exclusivement, par configuration initiale, à cette production via les premiers convertisseurs CV1 associés reliés en parallèle et dont la tension de sortie peut également être ajustée pour assurer la charge de la batterie de servitude B2.

Comme illustré non limitativement sur les figures 2 et 3, la batterie B1 peut également comprendre un bus multiplexé BM couplé à ses moyens de contrôle principaux MCP, à chacun de ses modules de conversion MCj, à chacun des premiers MI1, deuxièmes MI2 et troisièmes MI3 moyens d'interruption, et aux éventuels moyens d'interruption complémentaires MIC. Dans ce cas, chaque module de conversion MCj peut comprendre un contrôleur CB couplé à ce bus multiplexé BM. On comprendra que chaque contrôleur CB assure l'interface entre son module de conversion MCj et les moyens de contrôle principaux MCP via le bus multiplexé BM. Cela permet les échanges de messages entre les modules de conversion MCj et les moyens de contrôle principaux MCP.

A titre d'exemple, le multiplexage peut être de type CAN (« Controller Area Network »).

Egalement comme illustré non limitativement sur la figure 3, chaque module de conversion MCj peut éventuellement et également comprendre des moyens de contrôle auxiliaires MCA propres à générer des signaux de commande propres à placer l'onduleur ON dans un état qui est fonction d'une instruction reçue (par exemple provenant du calculateur de supervision CS). Ces moyens de contrôle auxiliaires MCA peuvent également générer des signaux de commande définissant les niveaux de tension vc2 délivrés par le premier convertisseur CV1 associé.

On notera que les moyens de contrôle auxiliaires MCA associés à chaque groupe Gj peuvent être propres à déterminer la tension aux bornes du groupe Gj associé et une température au sein du groupe Gj associé, et à estimer un état de charge (ou SOC) en cours de ce groupe Gj associé. Ils peuvent alors transmettre au moins chaque état de charge estimé et chaque température déterminée aux moyens de contrôle principaux MCP (ici via le bus multiplexé BM).

Chaque état de charge peut être estimé au moyen d'un algorithme adapté au groupe Gj considéré.

On notera également que les moyens de contrôle principaux MCP peuvent à chaque instant calculer l'état de charge global de leur batterie B1. Les moyens de contrôle principaux MCP peuvent également déterminer l'état de santé (ou SOH (« State Of Health »)) de leur batterie B1, gérer l'équilibrage des groupes Gj de cellule(s), communiquer avec le calculateur de supervision CS du GMP, limiter les appels de courant (courants de décharge et de recharge), et assurer la gestion thermique de leur batterie B1 en régulant le débit d'un liquide caloporteur la traversant et/ou l'entourant partiellement.

Les moyens de contrôle principaux MCP peuvent ainsi optimiser la gestion des cellules de la batterie B1, afin d'optimiser leur durée de vie et l'autonomie du véhicule V. Ils peuvent également, par un pilotage individuel de chaque groupe Gj de cellule(s), réaliser un équilibrage dynamique et une maîtrise de l'état de charge de ces groupes Gj lorsque le véhicule V est en fonctionnement (des groupes pouvant se recharger pendant que d'autres, au même instant, se déchargent ou ne font rien). Cette gestion des groupes Gj peut être définie selon les profils de mission du véhicule V. De plus, le pilotage individuel de chaque groupe Gj de cellule(s) permet de limiter l'utilisation de groupe(s) Gj dont la température est la plus élevée afin de maintenir une température homogène au sein de la batterie B1.

Lorsque chaque module de conversion MCj comprend un contrôleur CB, ses moyens de contrôle auxiliaires MCA sont connectés au bus multiplexé BM afin de recevoir chaque instruction qui les concerne et à partir de laquelle ils vont générer les signaux de commande précités pour l'onduleur ON et le premier convertisseur CV1 associés.

Ces moyens de contrôle auxiliaires MCA peuvent, par exemple, être chacun agencés sous la forme d'un composant numérique programmable (comme par exemple un microcontrôleur ou un DSP).

A titre d'exemple, chaque onduleur ON peut être agencé sous la forme d'un pont en H, bien connu de l'homme de l'art. Dans ce cas, comme illustré sur la figure 3, chaque module de conversion MCj peut comprendre des moyens de pilotage (ou « drivers ») MP propres à placer son pont en H ON dans un état qui est fonction d'un signal de commande généré par ses moyens de contrôle auxiliaires MCA.

Comme illustré sur la figure 3, ces moyens de pilotage MP peuvent être également propres à placer le premier convertisseur CV1 associé dans un état qui est fonction d'un signal de commande généré par les moyens de contrôle auxiliaires MCA associés et définissant le niveau de tension vc2 devant être délivré par ce premier convertisseur CV1.

Chaque pont en H peut, par exemple, comprendre quatre composants électroniques tels que des transistors de puissance (éventuellement de type MOSFET) dont les états respectifs peuvent être contrôlés par des commandes en tension. Ces quatre transistors de puissance peuvent être agencés par paires dans deux demi-ponts. Dans ce cas, les moyens de pilotage MP peuvent, par exemple, être agencés sous la forme de deux circuits de type Bootstrap, biens connus de l'homme de l'art. Ces deux circuits de type Bootstrap peuvent être eux-mêmes alimentés par un second convertisseur CV2 de type boost (ou « step-up regulator ») si le nombre de cellules du groupe Gj n'est pas suffisant pour assurer une tension de commande suffisante. On notera que si le groupe Gj est constitué d'un nombre suffisant de cellules en série le second convertisseur CV2 n'est pas nécessaire.

Par exemple, les transistors de puissance peuvent être commandés de manière à placer le pont en H (i.e. l'onduleur ON) dans trois états différents. Ces trois états peuvent être matérialisés par une variable notée uj associée à MCj (ou Gj) et pouvant prendre trois valeurs -1, 0, +1. Par exemple, le premier état associé à la première valeur de uj égale à -1 peut permettre l'inversion de la première tension (d'entrée) vc1, le deuxième état associé à la deuxième valeur de uj égale à 0 peut permettre de définir une tension nulle en sortie de l'onduleur ON, et le troisième état associé à la troisième valeur de uj égale à +1 peut permettre de délivrer en sortie une tension égale à celle vc1 délivrée par le groupe Gj de cellule(s) associé. La tension de sortie vc3 d'un onduleur ON associé au groupe Gj de cellule(s) peut alors s'exprimer par la formule vc3 = vc1*uj.

Ce principe de pilotage basé sur trois états permet de produire en sortie principale de la batterie B1 une tension positive, nulle ou négative et, par exemple, de recharger au moins un groupe Gj de cellule(s) pendant qu'au moins un autre groupe Gj' de cellule(s) se décharge ou ne fait rien. Ainsi, l'invention permet, par exemple, de ne pas utiliser deux groupes Gj et Gj' en plaçant les onduleurs ON associés dans leur deuxième état (uj = 0), et selon le sens du courant de décharger un groupe Gj" en plaçant l'onduleur ON associé dans le troisième état (u3 = +1), ou bien de décharger deux groupes Gj et Gj' en plaçant les onduleurs ON associés dans le troisième état (uj = uj' = +1), et de recharger un groupe Gj" en plaçant l'onduleur ON associé dans le premier état (uj" = -1).

Chaque éventuel second convertisseur CV2, de type DC-DC, d'un module de conversion MCj, peut, en cas de besoin, convertir la première tension continue vc1 en une quatrième tension continue vc4 prédéfinie destinée à alimenter les moyens de pilotage MP associés. Cette quatrième tension continue vc4 peut, par exemple, être égale à 12 V pour une puissance de 1 W.

On notera également que l'utilisation de composants semiconducteurs de puissance haute-fréquence intégrés dans un même module de conversion MCj, éventuellement sur un même substrat, peut, par exemple, être envisagée en technologie GaN ou Si.

L'invention offre plusieurs avantages, parmi lesquels :
- elle permet de s'affranchir d'un chargeur dans la batterie, tout en autorisant n'importe quel type de recharge (en courant continu, en courant alternatif monophasé, et en courant alternatif triphasé), et cela quelle que soit la fréquence,
- elle permet d'absorber n'importe quelle forme de courant, notamment sinusoïdal ou autre, en cas de recharge sur un réseau alternatif quelconque,
- elle permet d'améliorer la sûreté de fonctionnement du fait de la possibilité de déconnecter (ou ne pas utiliser) au moins un groupe de cellule(s) défaillant ou dont la température est trop élevée, tout en gardant le système fonctionnel, voire de déconnecter toutes les cellules de la batterie en cas d'arrêt prolongé du système ou en cas d'incident,
- elle permet de ne pas avoir d'harmoniques dans le courant injecté, et donc une réduction notable des pertes fer,
- elle permet l'utilisation en interne de convertisseurs DC/DC fonctionnant à fort courant et à très basse tension (typiquement inférieure à 20 V), contrairement aux convertisseurs DC/DC externes actuels qui fonctionnent à fort courant et à basse tension (typiquement 400 V),
- elle permet d'améliorer l'efficacité tout en réduisant le volume global et la masse globale par rapport à une batterie de l'art antérieur associée à un onduleur, des convertisseurs et un chargeur externes et classiques,
- elle permet de réduire les coûts du fait de l'absence d'onduleur, de convertisseurs et de chargeur externes et classiques, voire d'une batterie de servitude (de type 12 V),
- elle peut permettre de faire fonctionner les machines électriques avec des tensions qui sont supérieures aux tensions actuelles d'environ 450 V, sans avoir recours à des classes de composants de puissance qui sont beaucoup plus chères au-delà de 600 V. Par conséquent, cette possibilité d'augmenter la tension de fonctionnement combinée à l'absence d'harmoniques dans le courant injecté peuvent permettre d'utiliser de nouvelles machines électriques offrant une meilleure densité de puissance volumique, une meilleure densité de puissance massique, une meilleure vitesse maximale de fonctionnement et un meilleur rendement,
- elle peut permettre d'effectuer la recharge de la batterie par la première ou deuxième entrée de recharge tout en délivrant du courant sur les première et troisième sorties principales.

## Revendications

1. Batterie rechargeable (B1) comprenant des cellules de stockage d'énergie électrique, au moins deux sorties principales (SPk) propres à délivrer des tensions de types différents et destinées à alimenter différents équipements électriques (MM, CP, B2) d'un système (V), et une première entrée (ER1) pour une recharge en courant continu, ladite première entrée (ER1) est également adaptée à une recharge en courant alternatif monophasé, et la batterie étant **caractérisée en ce qu'**elle comprend en outre :
i) une seconde entrée (ER2) pour la recharge en courant alternatif triphasé,
ii) des moyens d'interruption (MIp) propres à être placés chacun dans un état fermé ou un état ouvert en fonction d'instructions reçues et installés sur lesdites première (ER1) et seconde (ER2) entrées et l'une au moins desdites sorties principales (SPk),
iii) des modules de conversion (MCj) et des groupes (Gj) d'au moins une cellule, un module de conversion (MCj) étant installé à chaque sortie d'un groupe (Gj), chaque module de conversion comprenant :
- un premier convertisseur (CV1) de type DC-DC permettant la réversibilité en puissance et propre à convertir une première tension continue fournie par la sortie dudit groupe (Gj) en une deuxième tension continue prédéfinie,
- un onduleur (ON) propre à convertir ladite première tension continue en une troisième tension, et réciproquement selon que l'on est dans une phase de décharge ou de recharge de la batterie (B1), et
- des moyens d'interconnexion (MCM) propres à connecter une sortie dudit premier convertisseur (CV1) ou une sortie dudit onduleur (ON) à une sortie d'un autre groupe (Gj') ou à l'une desdites sorties principales (SPk) ou à l'une desdites première (ER1) et seconde (ER2) entrées en fonction d'une instruction reçue, et
iv) des moyens de contrôle principaux (MCP) propres à générer chaque instruction dédiée à chaque module de conversion (MCj) et à chacun desdits moyens d'interruption (MIp) en fonction d'une définition reçue du type de tension requis pour alimenter au moins l'un desdits équipements électriques (MM, CP, B2) ou pour recharger au moins un groupe (Gj) de cellule(s).

2. Batterie selon la revendication 1, **caractérisée en ce que** lesdits moyens d'interruption (MIp) comprennent i) des premiers moyens d'interruption (MI1) installés sur ladite première entrée (ER1) afin d'interdire ou d'autoriser ladite recharge en courant continu ou ladite recharge en courant alternatif monophasé en fonction d'une instruction reçue, ii) des deuxièmes moyens d'interruption (MI2) installés sur ladite seconde entrée (ER2) afin d'interdire ou d'autoriser ladite recharge en courant alternatif triphasé en fonction d'une instruction reçue, et iii) des troisièmes moyens d'interruption (MI3) installés sur l'une desdites sorties principales (SPk) afin d'interdire ou d'autoriser l'alimentation en tension de chaque équipement électrique (MM) associé.

3. Batterie selon la revendication 2, **caractérisée en ce qu'**elle comprend également des moyens d'interruption complémentaires (MIC) connectés à des bornes de mise en série de groupes (Gj) de cellule(s) et propres à être placés chacun dans un premier état fermé assurant une interconnexion de bornes de neutre de groupes (Gj) ou un second état fermé assurant une interconnexion de bornes de mise en série de groupes (Gj) en fonction d'instructions reçues desdits moyens de contrôle principaux (MCP).

4. Batterie selon la revendication 3, **caractérisée en ce que** lesdits moyens de contrôle principaux (MCP) sont propres à générer i) une première instruction destinée à placer lesdits premiers moyens d'interruption (MI1) dans l'état fermé, lesdits deuxièmes (MI2) et troisièmes (MI3) moyens d'interruption dans l'état ouvert, et lesdits moyens d'interruption complémentaires (MIC) dans le premier état pour induire une recharge en courant continu ou une recharge en courant alternatif monophasé, ou ii) une deuxième instruction destinées à placer lesdits deuxièmes moyens d'interruption (MI2) dans l'état fermé, lesdits premiers (MI1) et troisièmes (MI3) moyens d'interruption dans l'état ouvert, et lesdits moyens d'interruption complémentaires (MIC) dans le second état pour induire une recharge en courant alternatif triphasé, ou iii) une troisième instruction destinée à placer lesdits troisièmes moyens d'interruption (MI3) dans l'état fermé, lesdits premiers (MI1) et deuxièmes (MI2) moyens d'interruption dans l'état ouvert, et lesdits moyens d'interruption complémentaires (MIC) dans le premier état pour induire une alimentation en tension de chaque équipement électrique (MM) associé à ladite sortie principale (SP2) sur laquelle sont installés lesdits troisièmes moyens d'interruption (MI3).

5. Batterie selon l'une des revendications 1 à 4, **caractérisée en ce que** ladite première entrée (ER1) est connectée à une partie de ladite sortie principale (SP2) sur laquelle sont installés lesdits troisièmes moyens d'interruption (MI3).

6. Batterie selon l'une des revendications 1 à 5, **caractérisée en ce que** ladite seconde entrée (ER2) est connectée à ladite sortie principale (SP2) sur laquelle sont installés lesdits troisièmes moyens d'interruption (MI3).

7. Batterie selon l'une des revendications 1 à 6, **caractérisée en ce qu'**elle comprend des première (SP1), deuxième (SP2) et troisième (SP3) sorties principales (SPk) propres à délivrer respectivement des tensions de trois types différents.

8. Batterie selon la revendication 7, **caractérisée en ce que** lesdits moyens de contrôle principaux (MCP) sont propres à générer des instructions destinées à induire une recharge de ladite batterie (B1) par ladite première (ER1) ou deuxième (ER2) entrée de recharge et en même temps la délivrance d'un courant sur lesdites première (SP1) et troisième (SP3) sorties principales.

9. Système (V) comprenant des équipements électriques (MM, CP, B2), **caractérisé en ce qu'**il comprend en outre au moins une batterie (B1) selon l'une des revendications précédentes, propre à alimenter lesdits équipements électriques (MM, CP, B2).

10. Système selon la revendication 9, **caractérisé en ce qu'**il constitue un véhicule de type tout électrique ou hybride.

## Patentansprüche

1. Wiederaufladbare batterie (B1) umfasst, die Zelle ist Speicherung von elektrischer Energie, mit mindestens zwei Ausgängen main (SPK) in adaptierten verschiedene Arten von Spannungen zu liefern und zur Versorgung verschiedenen Geräte elektrische (MM, PC, B2), eines Systems (V), und ein erster Eingang (ER1) für eine Nachfüllung in DC, wobei der erste Eingang (ER1) auch geeignet ist für die in Einphasen Wechselstrom aufgeladen und die Batterie **dadurch gekennzeichnet ist dass** umfasst sie zusätzlich :
i) einen zweiten Eingang (ER2) zum Aufladen in Drehstrom,
ii) Unterbrechungsmittel (MIp) angepaßt angeordnet zu werden jeweils in einem geschlossenen Zustand oder in einem Zustand geöffnet basierend Instruktions empfangen und installiert werden genannt ersten (ER1) und dem zweiten (ER2) Eingänge und einen zumindest der Ausgänge Haupt (SPk),
iii) Konvertierungsmodule (MCj) und Gruppen (G i) von mindestens einer Zelle, wobei an jedem Ausgang einer Gruppe (Gj) ein Umwandlungsmodul (MCj) installiert ist, wobei jedes Umwandlungsmodul umfasst:
- einen ersten Wandler (CV1) vom DC-DC-Typ, der eine Leistungsumkehr ermöglicht und geeignet ist, eine erste Gleichspannung, die vom Ausgang der Gruppe (Gj) geliefert wird, in eine zweite vordefinierte Gleichspannung umzuwandeln,
- einen Inverter (ON) geeignet ist zum Umwandeln der ersten Gleichspannung in eine dritte Spannun, und umgekehrt, je nachdem, ob man sich in einer Phase der Entladung oder Wiederaufladen der Batterie (B1) und
- Mittel der Zusammenschaltung (MCM), die einen Ausgang des Verbindungs ersten Wandler (CV1) oder einen Ausgang des Inverters (ON) zu einem Ausgang von, einer anderen Gruppe (Gj') oder an dem einen der Hauptstellen (SPk) oder an einen der ersten (ER1) und zweiten (ER2) Eingänge gemäß einer empfangenen Anweisung, und
iv) eine Steuereinrichtung main (TMP) angepasst jeden Befehl gewidmet erzeugen jedes Umwandlungsmodul (MCj) und jedes des Unterbrechungsmittel (MIp) als Funktion der eine Definition von der Art der Spannung zumindest erforderlich empfangenen zum Zuführen von eines der Geräte elektrisch (MM, PC, B2) oder zum Aufladen von mindestens einer Gruppe (Gj) Zelle(n).

2. Batterie nach Anspruch 1, **dadurch gekennzeichnet, dass** die Unterbrechungsmittel (MIp) umfassen i) erste Unterbrechungsmittel (MI1), die an dem ersten Eingang (ER1) installiert sind, um das Wiederaufladen mit Gleichstrom oder einphasigem Wechselstrom zu verbieten oder zu genehmigen Stromaufladen in Abhängigkeit von einer empfangenen Anweisung, ii) zweite Unterbrechungsmittel (MI2), die an dem zweiten Eingang (ER2) installiert sind, um die dreiphasige Wechselstromaufladung gemäß einer empfangenen Anweisung zu verbieten oder zu genehmigen, und iii) dritte Unterbrechungsmittel (MI3) auf einem der installierten Hauptausgänge (SPk) in Reihenfolge zu verbieten oder die Spannungsversorgung für jeden Ausrüstungs elektrischen (MM) zugeordneten autorisieren.

3. Batterie nach Anspruch 2, **dadurch gekennzeichnet, dass** sie auch komplementäre Unterbrechungsmittel (MIC) umfasst, die mit Anschlüssen verbunden sind, um Gruppen (Gj) der Zelle(n) und dazu ausgelegt platziert jeweils in einem ersten, geschlossenen Zustand zu sein Zusammenschaltung der Gruppe Bereitstellung neutrale Anschlüsse (Gj) oder ein zweiter geschlossener Zustand, der eine Verbindung von Gruppenreihenverbindungsanschlüssen (Gj) als Funktion von Befehlen bereitstellt, die von der Hauptsteuereinrichtung (MCP) empfangen werden.

4. Batterie nach Anspruch 3, **dadurch gekennzeichnet, dass** die Hauptsteuermittel (MCP) angepasst sind, um i) eine erste Anweisung zum Versetzen der ersten Schaltmittel (MI1) in den geschlossenen Zustand, der zweiten (MI2) und dritten (MI3) Unterbrechungsmittel in dem offenen Zustand, und wobei die Unterbrechungsmittel weiter (MIC) in dem ersten Zustand zu induzieren, einen Ladegleichstrom oder eine Nachfüllung in Einphasen
- Wechselstrom, oder ii) eine zweite Anweisung zum Anordnen der zweiten Schalteinrichtung (MI2) in dem, geschlossenen Zustand, wobei die erste (MI1) und dritte (MI3) Unterbrechungsmittel in dem offenen Zustand, und wobei die Unterbrechungsmittel weiter (MIC) in dem zweiten Zustand zu veran dreiphasigen Wechselstrom Nachladung, oder iii) eine dritte Anweisung zum Versetzen des dritten Unterbrechungsmittels (MI3) in den geschlossenen Zustand, wobei das erste (MI1) und das zweite (MI2) Unterbrechereinrichtung in dem offenen Zustand, und wobei
die komplementären Unterbrechungsmittel (MIC) in dem ersten Zustand eine induzieren Spannungsversorgung jeder elektrische Geräte (MM), der mit dem Hauptausgang (SP2), auf dem die dritte Unterbrechungsmittel (MI3) installiert sind.

5. Batterie nach einem der Ansprüche 1 bis 4, **dadurch gekennzeichnet, daß** dem ersten Eingang (ER1) verbunden ist, einen Teil
der genannten Hauptausgang (SP2), auf dem die dritte Unterbrechungsmittel (MI3) installiert sind.

6. Batterie nach einem der Ansprüche 1 bis 5, **dadurch gekennzeichnet, dass** der zweite Eingang (ER2) mit dem Ausgang primären (SP2), an dem installiert sind die dritten Schaltmittel (MI3).

7. Batterie nach einem der Ansprüche 1 bis 6, **dadurch gekennzeichnet, dass** sie erste (SP1), zweite (SP2) und dritte (SP3) Hauptausgänge (SPk) umfasst, die jeweils geeignet sind, Spannungen von drei verschiedenen Typen zu liefern.

8. Batterie nach Anspruch 7, **dadurch gekennzeichnet, dass** die Hauptsteuermittel (MCP) geeignet sind, Anweisungen zu erzeugen, die das Aufladen der Batterie (B1) durch den ersten (ER1) oder zweiten (ER2) Aufladeeingang bewirken und gleichzeitig liefern einen Strom zu den ersten (SP1) und dritten (SP3) Hauptausgängen.

9. System (V) mit elektrischen Geräten (MM, CP, B2), **dadurch gekennzeichnet, dass** es ferner mindestens eine Batterie (B1) nach einem der vorhergehenden Ansprüche umfasst, die geeignet ist, die elektrischen Geräte (MM, CP, B2) zu versorgen.

10. System nach Anspruch 9, **dadurch gekennzeichnet, dass** es ein vollelektrisches oder Hybridfahrzeug darstellt.

## Claims

1. Battery rechargeable (B1) comprising the cells storage of electrical energy, at least two outputs main (SPk) adapted to deliver different types of voltages and for supplying different equipment electrical (MM, PC, B2) a system (V), and a first input (ER1) for a refill in DC, said first input (ER1) is also suitable for recharging in single phase alternating current, and the battery being **characterized in that** it comprises in addition :
i) a second input (ER2) for recharging in three-phase alternating current,
ii) interruption means (MIp) adapted to be placed each in a closed state or a state opened based instructions received and installed on are called first (ER1) and second (ER2) inputs and one at least of said outputs main (SPk),
iii) conversion modules (MCj) and groups (Gi) of at least one cell, a conversion module (MCj) being installed at each output a group (Gj), each conversion module comprising :
- a first converter (CV1) of the DC-DC type allowing reversibility in power and suitable for converting a first direct voltage supplied by the output of said group (Gj) into a second predefined direct voltage,
- an inverter (ON) suitable for converting said first direct voltage into a third voltage, and vice versa depending on whether one is in a phase of discharging or recharging the battery (B1), and
- means of interconnection (MCM) capable of connecting an output of said first converter (CV1) or an output of said inverter (ON) to an output of another group (Gj') or to the one of said main outlets (SPk) or to one of said first (ER1) and second (ER2) inputs according to an instruction received, and
iv) control means main (MCP) adapted to generate each instruction dedicated to each conversion module (MCj) and each of said interrupting means (MIp) as a function of a definition received from the type of voltage required for supplying at least one of said equipments electrical (MM, PC, B2) or to recharge at least one group (Gj) cell (s).

2. Battery according to claim 1, **characterized in that** said interrupting means (MIp) comprise i) first interrupting means (MI1) installed on said first input (ER1) in order to prohibit or authorize said recharging in direct current or said single-phase alternating current recharging as a function of a received instruction, ii) second interrupting means (MI2) installed on said second input (ER2) in order to prohibit or authorize said alternating current recharging three-phase according to an instruction received, and iii) third interrupting means (MI3) installed on one of said main outputs (SPk) in order to prohibit or authorize the voltage supply to each item of equipment electrical (MM) associated.

3. Battery according to claim 2, **characterized in that** it also comprises complementary interrupting means (MIC) connected to terminals for placing in series groups (Gj) of cell (s) and adapted to be placed each in a first closed state providing interconnection of group neutral terminals (Gj) or a second closed state providing interconnection of group series connection terminals (Gj) as a function of instructions received from said main control means (MCP).

4. Battery according to claim 3, **characterized in that** the esdits main control means (MCP) are adapted to generate i) a first instruction for placing said first switch means (MI1) in closed state, said second (MI2) and third (MI3) interruption means in the open state, and said interrupting means further (MIC) in the first state to induce a charging direct current or a refill in single phase alternating current, or ii) a second instruction for placing said second switch means (MI2) in the closed state, said first (MI1) and third (MI3) interruption means in the open state, and said interrupting means further (MIC) in the second state to induce three-phase alternating current recharging, or iii) a third instruction for placing said third interrupting means (MI3) in the closed state, said first (MI1) and second (MI2) interrupt means in the open state,
and said complementary interrupt means (MIC) in the first state to induce a voltage supply of each electrical equipment (MM) associated with said main output (SP2) on which said third interrupting means (MI3) are installed.

5. Battery according to one of claims 1 to 4, **characterized in that** said first input (ER1) is connected to a part of said main output (SP2) on which said third interrupting means (MI3) are installed.

6. Battery selo n one of claims 1 to 5, **characterized in that** said second input (ER2) is connected to said output primary (SP2) on which are installed said third switch means (MI3).

7. Battery according to one of claims 1 to 6, **characterized in that** it comprises first (SP1), second (SP2) and third (SP3) main outputs (SPk) suitable for respectively delivering voltages of three different types.

8. Battery according to claim 7, **characterized in that** said main control means (MCP) are suitable for generating instructions intended to induce recharging of said battery (B1) by said first (ER1) or second (ER2) recharging input and at the same time delivering a current to said first (SP1) and third (SP3) main outputs.

9. System (V) comprising electrical equipment (MM, CP, B2), **characterized in that** it further comprises at least one battery (B1) according to one of the preceding claims, suitable for supplying said electrical equipment (MM, CP, B2).

10. System according to Claim 9, **characterized in that** it constitutes an all electric or hybrid type vehicle.
